# EUROPÄISCHE PATENTSCHRIFT

(11) **EP 2 683 561 B1**
(45) Veröffentlichungstag und Bekanntmachung des Hinweises auf die Patenterteilung: **06.04.2022**
(21) Anmeldenummer: 12709810.1
(22) Anmeldetag: 10.02.2012
(51) Int. Cl.: B60C 11/24, F16D 66/02, H01R 39/58

(54) **VERSCHLEISSERKENNUNGSSYSTEM UND VERFAHREN**
WEAR DETECTION SYSTEM AND METHOD
SYSTÈME ET PROCÉDÉ DE DÉTECTION D'USURE

(30) Priorität: 09.03.2011 DE 102011005302
(43) Veröffentlichungstag der Anmeldung: 15.01.2014
(73) Patentinhaber: Schunk Transit Systems GmbH, 35435 Wettenberg (DE)
(72) Erfinder: PFEFFER, Daniel, 35325 Mücke (DE); SPIES, Jürgen, 35428 Langgöns (DE); NETTESHEIM, Stefan, 12205 Berlin (DE); JAKUBITH, Sven, 12203 Berlin (DE); FLEISCHHAUER, Guntram, 53102 Lohra (DE); STAUBACH, Timo, 36358 Herbstein (DE)
(74) Vertreter: advotec.
(86) Internationale Anmeldenummer: PCT/EP2012/052291
(87) Internationale Veröffentlichungsnummer: WO 2012/119832

(56) Entgegenhaltungen:
- DE-A1- 19 840 081
- DE-A1-102007 009 423
- GB-A- 2 092 390
- JP-A- 2007 300 745

## Beschreibung

Die Erfindung betrifft ein Verschleißerkennungssystem nach dem Oberbegriff des Anspruchs 1 sowie ein Verfahren zur Verschleißerkennung nach dem Oberbegriff des Anspruchs 6.

Reibelemente, wie beispielsweise Kohlebürsten für Elektromotore, Reibbelege zur Kraftübertragung, Bremsbelege und Festschmierstoffstücke, sowie Schleifleisten für Schienenfahrzeuge sind grundsätzlich immer einem Verschleiß durch Abrieb von Material des Reibelements unterworfen. Häufig ist es wünschenswert, das Reibelement bereits vor einem Erreichen einer eine Funktion beeinträchtigten Verschleißgrenze auszutauschen. So werden Verschleißerkennungssysteme regelmäßig dazu eingesetzt, einen Verschleißzustand von Reibelementen zu überwachen. Bekannt sind hier elektrische Kontakte an Reibelementen, oder auch Schalter, die ein Erreichen einer Verschleißgrenze signalisieren können. Derartige Verschleißerkennungssysteme erfordern jedoch eine Verkabelung der Kontakte bzw. Schalter mit einer Steuereinheit. Eine derartige Verkabelung ist nur relativ kostenaufwendig herzustellen, insbesondere wenn eine Vielzahl Reibelemente gleichzeitig überwacht werden sollen. So kann eine Verkabelung, für beispielsweise Bürsten eines Generators, auch zur Reduzierung des Verkabelungsaufwands in Art einer Reihenschaltung ausgebildet sein. Welche Bürste das betreffende Signal ausgelöst hat, ist dann jedoch nicht mehr vom Verschleißerkennungssystem erkennbar.

Weiter ist es bekannt, Reibelemente mit einer Transpondereinheit zu versehen, die mit einer Sende-Empfangseinheit drahtlos kommunizieren kann, wodurch eine aufwendige Verkabelung der Reibelemente entfällt. Die DE 10 2007 009 423 A1 offenbart ein derartiges Verschleißerkennungssystem, bei dem eine Kohlebürste mit einer Transpondereinheit versehen ist. Bei Erreichen einer Verschleißgrenze der Kohlebürste wird die Transpondereinheit durch Kontakt mit einer Reibfläche, an die die Kohlebürste anliegt, zerstört. Die Kohlebürste kann dann nicht mehr von einer Sende-Empfangseinheit detektiert werden, worauf diese die Kohlebürste als verschlissen erkennt. Auch kann vorgesehen sein, dass die Transpondereinheit Messwertaufnehmer zur Bestimmung einer Temperatur der Kohlebürste aufweist, wobei diese Daten von der Transpondereinheit an die Sende-Empfangseinheit übermittelt werden.

Das bekannte Verschleißerkennungssystem weist den Nachteil auf, dass eine Zerstörung der Transpondereinheit bei Erreichen der Verschleißgrenze zwingend erforderlich ist. Die Transpondereinheit muss daher so ausgebildet sein bzw. so an der Kohlebürste befestigt sein, dass sie bei Erreichen der Verschleißgrenze bzw. der Reibfläche sicher zerstört wird. Kostengünstige Transpondereinheiten, wie Sie beispielsweise in Etikettenform erhältlich sind, können daher hier keine Verwendung finden, da sich die Etiketten durch Wärmeeinwirkung in unmittelbarer Nähe der Reibfläche ablösen können oder aufgrund einer mangelhaften Haftung an der Kohlebürste nicht mechanisch zerstört werden können.

Auch können nur weitergehende Informationen über einen Verschleißzustand eines Reibelements vor Erreichen einer Verschleißgrenze ermittelt werden, wenn eine Transpondereinheit ergänzend mit Messwertaufnehmern ausgestattet ist. So kann die Transpondereinheit an einer beliebigen, für eine Montage gut geeignete Position an einem Reibelement befestigt sein, wobei die Transpondereinheit beispielsweise über Kabel mit einem Messwertaufnehmer oder einem einfachen im Bereich einer Verschleißgrenze des Reibelements angebrachten Kontakts verbunden ist. So sind Transpondereinheiten, die einer Zerstörung bedürfen, nur aufwendig zu befestigen, und solche, die mit Messwertaufnehmern und Verbindungskabeln ausgestattet sind vergleichsweise teuer.

Aus der GB 2 092 390 A ist eine automatisierte Verschleißanzeige eines Schleifkontakts mittels eines Permanentmagneten und eines Reedschalters bekannt. Bedingt durch eine zunehmende Abnutzung der Bürste des Schleifkontakts, gleitet diese in einem sie umgebenden Führungsgehäuse in Richtung ihrer Kontaktfläche. Vor Erreichen des vollständigen Verschleißes betätigt der in die Bürste eingearbeitete Permanentmagnet, den in ihrem Führungsgehäuse befindlichen Reedschalter.

Die DE 198 40 081 A1 beschreibt ein Förderband, in dem Transponder mit jeweils einer Abschirmung angeordnet sind. Die Abschirmung kann verschleißbedingt zerstört werden, wodurch dann der Transponder mit einem Sendeempfänger kommunizieren kann.

Dokument JP2007300745A offenbart eine Schleifleiste mit einer Verschleißerkennungssystem.

Der vorliegenden Erfindung liegt daher die Aufgabe zugrunde, ein Verschleißerkennungssystem und ein Verfahren zur Verschleißerkennung vorzuschlagen, welches eine kostengünstige und einfache Verschleißüberwachung von Schleifleisten ermöglicht.

Diese Aufgabe wird durch ein Verschleißerkennungssystem mit den Merkmalen des Anspruchs 1 und ein Verfahren zur Verschleißerkennung mit den Merkmalen des Anspruchs 6 gelöst.

Das erfindungsgemäße Verschleißerkennungssystem umfasst zumindest ein konsumierbares Reibelement und eine Transpondereinheit, wobei die Transpondereinheit mit einer Sende-Empfangseinheit drahtlos kommunizieren kann, wobei das Verschleißerkennungssystem eine Abschirmeinrichtung aufweist, wobei die Abschirmeinrichtung so ausgebildet ist, dass mittels der Abschirmeinrichtung die Transpondereinheit in Abhängigkeit eines Verschleißzustandes des Reibelements zumindest teilweise abschirmbar ist, derart, dass eine Kommunikation zwischen der Transpondereinheit und der Sende-Empfangseinheit beeinflussbar ist.

Durch die Beeinflussung der Transpondereinheit durch eine davon unabhängig ausgebildete Abschirmeinrichtung, ist es möglich, eine Kommunikationsverbindung zwischen der Transpondereinheit und der Sende-Empfangseinheit zu verändern, zu unterbinden oder überhaupt erst zu ermöglichen. Da das von der Sende-Empfangseinheit empfangene Signal der Transpondereinheit im Wesentlichen alleine von der Abschirmeinrichtung beeinflusst wird, kann als eine Transpondereinheit nahezu jede beliebige Transpondereinheit, insbesondere eine kostengünstige Transpondereinheit verwendet werden. Weiter wird eine Kommunikation zwischen der Transpondereinheit und der Sende-Empfangseinheit wesentlich vereinfacht, da der Inhalt der übertragenden Daten grundsätzlich unerheblich ist. Es kommt lediglich darauf an, dass die Transpondereinheit von der Sende-Empfangseinheit überhaupt erfasst bzw. erkannt wird. Auch ist zur Ausbildung der Abschirmeinrichtung nicht zwangsläufig eine Integration eines neuen Bauteils oder einer neuen Baueinheit notwendig. Das Erreichen einer Verschleißgrenze des Reibelements ist von der Sende-Empfangseinheit durch eine Veränderung eines Antwortsignals der Transpondereinheit detektierbar oder alternativ durch ein Ausbleiben des Transpondersignals nach vorherigem Empfang bzw. durch einen Empfang nach einem vorherigem Ausbleiben des Transpondersignals.

Erfindungsgemäß ist die Transpondereinheit in dem Reibelement angeordnet. Das heißt, die Transpondereinheit ist vollständig in dem Reibelement aufgenommen, beispielsweise durch Einbetten der Transpondereinheit im Material des Reibelements bei dessen Herstellung, oder auch durch Einsetzen in eine Bohrung in dem Reibelement. Dies bietet sich insbesondere dann an, wenn die Transpondereinheit vor schädigenden, äußeren Einflüssen geschützt werden soll. Weiter ist es auch möglich, mehrere Transpondereinheiten in dem Reibelement anzuordnen. Dies ist insbesondere dann vorteilhaft, wenn das Reibelement nicht gleichmäßig verschleißt, da dann auch ein Abschnitt des Reibelements mit einem maximalen Verschleiß überwacht bzw. detektiert werden kann.

Erfindungsgemäß ist das Reibelement eine Schleifleiste zur Übertragung elektrischer Energie von einem Fahrdraht auf ein Fahrzeug. Derartige Schleifleisten werden regelmäßig an Schienenfahrzeugen verwandt und mittels eines Pantographen mit dem Fahrdraht kontaktiert. Der Pantograph entspricht hier der Haltevorrichtung, wobei alleine durch eine Abstandsänderung des Pantographen relativ zum Fahrdraht kein Verschleißzustand der Schleifleiste mit der Transpondereinheit detektiert werden kann. Vielmehr ist vorgesehen, die Transpondereinheit so in der Schleifleiste anzuordnen, dass bei einem Abrieb der Schleifleiste die Transpondereinheit freigelegt und damit, beispielsweise mittels von in Fahrdrahtnähe positionierten Sende-Empfangseinheiten, ein Verschleiß der Schleifleiste detektiert wird. Somit ist die Abschirmeinrichtung von der Schleifleiste selbst ausgebildet.

In einer Ausführungsform kann die Transpondereinheit eine Codierung aufweisen, die von der Sende-Empfangseinheit empfangbar ist. Die Codierung kann als ein Schaltsignal genutzt werden, um zum Beispiel eine Maschine in Betrieb setzen zu können. Wird ein Reibelement in die Maschine eingebaut, das eine vorgegebene Codierung nicht aufweist, kann ein entsprechendes Schaltsignal nicht erzeugt werden, so dass infolge dessen die Maschine nicht in Betrieb genommen werden kann. Somit ist sichergestellt, dass nur für die Maschine zugelassene Reibelemente eingesetzt werden können. Wenn eine Vielzahl von Reibelementen verwendet wird, wird es weiter auch möglich festzustellen, welches der Reibelemente ausgefallenen bzw. verschlissen ist, wenn jedes Reibelement eine individuelle Codierung mittels der Transpondereinheit aufweist. Das Verschleißerkennungssystem kann zu derartigen Steuerzwecken mit einer Steuereinheit bzw. einer Maschinensteuerung verbunden sein.

Vorteilhaft kann die Transpondereinheit eine RFID-Transpondereinheit sein. Zwar ist auch ein Einsatz einer Transpondereinheit denkbar, die beispielsweise auf optischer Übertragungstechnik basiert, jedoch sind RFID-Transpondereinheiten vergleichsweise kostengünstig verfügbar. Vorzugsweise können passive RFID-Traspondereinheiten Verwendung finden, da diese keine externe Stromversorgung benötigen. Weiter ist ein Funksignal zwischen der RFID-Transpondereinheit und der Sende-Empfangseinheit mittels der Abschirmeinrichtung unaufwendig beeinflussbar.

Eine kontrollierte Abschirmung der Transpondereinheit kann dadurch ermöglicht werden, dass die Abschirmeinrichtung der Transpondereinheit unmittelbar benachbart angeordnet ist. Sofern die Transpondereinheit eine Antenne aufweist, kann diese so durch ein mit elektromagnetischer Strahlung wechselwirkendes Material, wie beispielsweise ein Metallwerkstoff, oder durch den Werkstoff des Reibelements selbst direkt abgeschirmt werden. Das Material oder auch die daraus ausgebildete Abschirmeinrichtung kann die Transpondereinheit immer vollständig abdecken, wobei dann eine Permittivität der Abschirmeinrichtung ungleichmäßig relativ zur Transpondereinheit ausgebildet ist, so dass zumindest in einer Position der Transpondereinheit relativ zur Abschirmeinrichtung, oder bei einem vollständigen oder teilweisen Entfernen der Abschirmeinrichtung eine Kommunikation mit der Sende-Empfangseinheit möglich ist. Insgesamt kann durch die unmittelbare Anordnung der Abschirmeinrichtung in Nähe der Transpondereinheit eine Lageänderung des Reibelements relativ zur Abschirmeinrichtung und/oder zur Transpondereinheit durch eine Kommunikation der Transpondereinheit mit der Sende-Empfangseinheit detektiert werden.

In einer Weiterbildung des Verschleißerkennungssysteme kann dieses eine Haltevorrichtung umfassen, die zur bewegbaren Positionierung des Reibelements relativ zu einer Reibfläche und zur Kontaktierung des Reibelements mit der Reibfläche dient. Das Reibelement kann demnach von der Haltevorrichtung gehaltert bzw. aufgenommen sein und beispielsweise mittels einer Federeinrichtung oder eines Aktuators gegen eine Reibfläche mit einer Andruckkraft gedrückt werden. Beispielsweise kann das Reibelement monolithisch mit einer Quaderform oder auch stabförmig ausgebildet sein und so von der Haltevorrichtung aufgenommen sein, dass es im Wesentlichen ortogonal zur Reibfläche in der Haltevorrichtung bewegbar ist.

Das erfindungsgemäße Verfahren zur Verschleißerkennung, insbesondere für Reibelemente, umfasst die Merkmale des Anspruchs 6. Die Vorteile des Verfahrens zur Verschleißerkennung betreffend wird auf die nähere Beschreibung des erfindungsgemäßen Verschleißerkennungssystems verwiesen.

Das Verfahren kann besonders einfach ausgeführt werden, wenn die Abschirmeinrichtung eine Permittivität eines räumlichen Übertragungsbereiches der Transpondereinheit verändert. So kann die Abschirmeinrichtung in dem Raum zwischenliegend der Transpondereinheit und der Sende-Empfangseinheit, der zur Übertragung von Sende- oder Empfangssignalen genutzt wird, angeordnet sein und die Sende- bzw. Empfangssignale durch eine Änderung der Permittivität des betreffenden Raumes beeinflussen. Bei elektromagnetischen Übertragungsverfahren kann dies beispielsweise durch Einbringen von elektrisch leitfähigen Materialien in den Raum oder ein entsprechendes Entfernen erfolgen. Wenn dies in Abhängigkeit eines Verschleißzustandes des Reibelements geschieht, kann aus einer Änderung der Permittivität auf einen Verschleißzustand rückgeschlossen werden.

Dies kann auch durch eine verschleißbedingte Maßänderung des Reibelements bewirkt werden, durch die eine Beseitigung einer Abschirmung der Transpondereinheit erfolgen kann. Ein durch Abrasion bedingter Verschleiß des Reibelements geht mit einer Maßänderung desselben einher, wobei die Maßänderung, wie beispielsweise eine Längenänderung oder ein Abrieb einer Oberfläche, zur Folge haben kann, dass eine Abschirmung der Transpondereinheit beseitigt wird. Somit geht ein Verschleiß des Reibelements mit einer Änderung eines Empfangssignals der Transpondereinheit einher, welche von der Sende-Empfangseinheit detektiert werden kann, und aus der Rückschlüsse auf einem Verschleißzustand des Reibelements gezogen werden können.

Somit kann in Abhängigkeit einer Position der Transpondereinheit relativ zu einer von dem Reibelement kontaktierten Reibfläche eine Abschirmung oder eine Beseitigung einer Abschirmung der Transpondereinheit erfolgen. Die Beseitigung kann durch Abrieb einer Oberfläche des Reibelements, beispielsweise einer Schleifleiste, erfolgen.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine nicht zur Erfindung gehörige erste Ausführungsform eines Verschleißerkennungssystems in einer schematischen Darstellung;
- **Fig. 2**: das nicht zur Erfindung gehörige Verschleißerkennungssystem nach der ersten Ausführungsform mit einem gegenüber der **Fig. 1** veränderten Verschleißzustand;
- **Fig. 3**: eine nicht zur Erfindung gehörige zweite Ausführungsform eines Verschleißerkennungssystems in einer schematischen Darstellung;
- **Fig. 4**: das nicht zur Erfindung gehörige Verschleißerkennungssystem nach der zweiten Ausführungsform mit einem gegenüber der **Fig.** 3 veränderten Verschleißzustand;
- **Fig. 5**: eine Schleifleiste in einer perspektivischen Ansicht mit einer dritten Ausführungsform des Verschleißerkennungssystems;
- **Fig. 6**: eine Explosionsdarstellung der Schleifleiste aus Fig. 5;
- **Fig. 7**: die Schleifleiste aus Fig. 5 in einem verschlissenen Zustand.

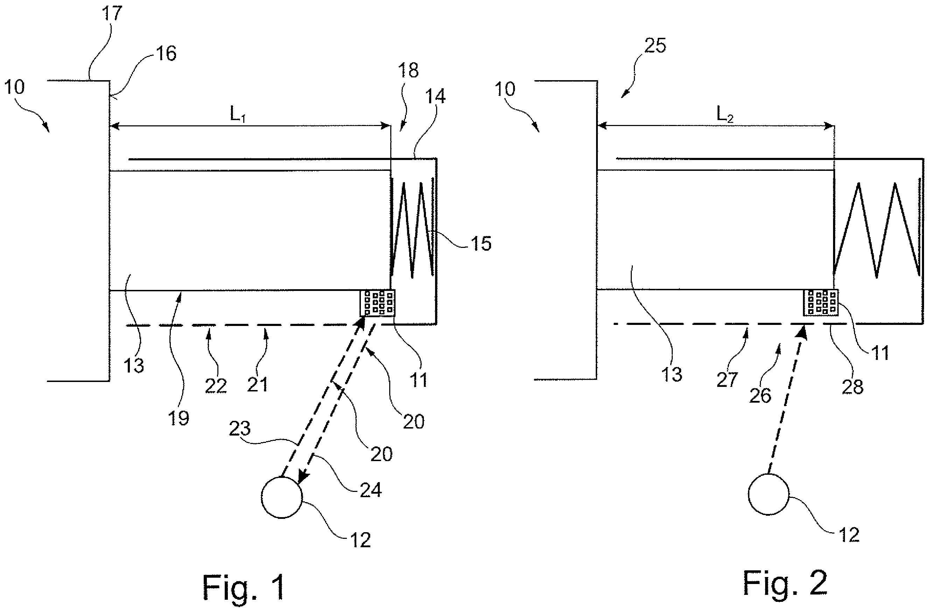

**Fig. 1** zeigt eine schematische Darstellung eines Verschleißerkennungssystems 10 mit einer Transpondereinheit 11, einer Sende-Empfangseinheit 12 und einer Kohlebürste 13. Die Kohlebürste 13 ist in einen Halter 14 zur längsbeweglichen Aufnahme der Kohlebürste 13 eingesetzt, und wird mittels einer Feder 15 gegen eine Reibfläche 16 eines hier abschnittsweise dargestellten Schleifrings 17 angedrückt. An einem hinteren Ende 18 der Kohlebürste 13 ist an einer Seitenfläche 19 der Kohlebürste 13 die Transpondereinheit 11 aufgeklebt. In dem Halter 14, welcher aus einem metallenen Werkstoff gebildet ist, sind Öffnungen 20, 21 und 22 ausgebildet, mit denen die Transpondereinheit 11 in Abhängigkeit einer Länge L der Kohlebürste 13 in Überdeckung gebracht werden kann.

Wie aus **Fig. 1** ersichtlich ist, gelangt die Transpondereinheit 11 bei einer Länge L1 der Kohlebürste 13 so in einen Bereich der Öffnung 20, dass die Sende-Empfangseinheit 12 ein Signal 23 an die Transpondereinheit 11 senden kann, das von dieser empfangen wird. Die Transpondereinheit 11 sendet wiederum ein Signal 24 zurück an die Sende-Empfangseinheit 12, wodurch nunmehr der Sende-Empfangseinheit 12 die Information vorliegt, dass die Transpondereinheit 11 im Bereich der Öffnung 20 angelangt ist und die Kohlebürste 13 folglich eine Länge L1 aufweisen muss.

Bei einem Verschleiß eines vorderen Endes 25 der Kohlebürste 13 vermindert sich die Länge L1 auf die hier in **Fig. 2** beispielhaft dargestellte Länge L2. Bei der Länge L2 gelangt die Transpondereinheit 11 in Überdeckung mit einer Abschirmeinrichtung 26 die vom Halter 14 ausgebildet wird. Im vorliegenden Fall ist die Abschirmeinrichtung 26 durch eine Wandung 27 des Halters 14 aus Metallblech gebildet. Wenn, wie in **Fig. 2** dargestellt, die Transpondereinheit 11 unmittelbar von einem Wandungsabschnitt 28 abgedeckt wird, wird die Transpondereinheit 11 gegenüber der Sende-Empfangseinheit 12 bzw. dem von der Sende-Empfangseinheit ausgesendeten Signal 23 abgeschirmt, und ist für die Sende-Empfangseinheit 12 nicht erreichbar. Diese Information kann nun in einer übergeordneten Maschinensteuerung oder auch von der Sende-Empfangseinheit 12 verarbeitet werden, wobei aus der unterbundenen Kommunikation zwischen der Sende-Empfangseinheit 12 und der Transpondereinheit 11 ein Rückschluss auf die Länge L2 der Kohlebürste 13 gezogen werden kann.

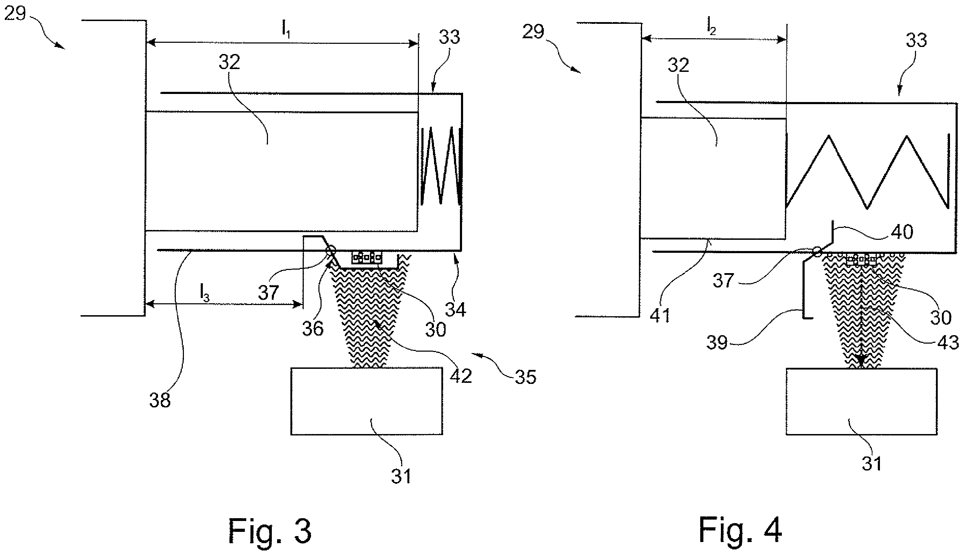

Die **Fig. 3** und **4** zeigen ein Verschleißerkennungssystem 29 mit einer Transpondereinheit 30 und einer Sende-Empfangseinheit 31 sowie einer Kohlebürste 32. Im Unterschied zu dem Verschleißerkennungssystem aus den **Fig. 1** und **2** ist hier die Kohlebürste 32 in einem Halter 33 eingesetzt, an dessen Außenfläche 34 die Transpondereinheit 30 fest fixiert ist. Eine Abschirmeinrichtung 35 ist aus einem Abdeckelement 36 aus Metall gebildet, welches um eine Achse 37 schwenkbar an einer Wandung 38 des Halters 33 gehaltert ist. Das Abdeckelement 36 ist in Art einer Wippe ausgebildet mit einem äußeren Ende 39 zur Abschirmung der Transpondereinheit 30 und einem inneren Ende 40 zur Anlage an einer Seitenfläche 41 der Kohlebürste 32.

Wie aus **Fig. 3** ersichtlich, liegt bei einer Länge l1 der Kohlebürste 32 das innere Ende 40 des Abdeckelements 36 an der Seitenfläche 41 der Kohlebürste 32 so an, dass das äußere Ende 39 des Abdeckelements 36 die Transpondereinheit 30 gegenüber elektromagnetischer Strahlung bzw. einem Signal 42 der Sende-Empfangseinheit 31 abschirmt. Bei Unterschreiten einer Länge 13 der Kohlebürste 32 kann das innere Ende 40 nicht mehr an der Seitenfläche 41 anliegen, so dass das Abdeckelement 36 unvermittelt, aufgrund hier nicht näher dargestellter Krafteinwirkung durch zum Beispiel eine Feder oder Gewichtskraft, freigegeben wird, so dass es um die Achse 37 geschwenkt wird und das äußere Ende 39 die Transpondereinheit 30 nicht mehr abschirmt. Das Signal 42 kann nun von der Transpondereinheit 30 empfangen werden, wobei die Transpondereinheit 30 ein Signal 43 an die Sende-Empfangseinheit 31 zurücksendet. Die Sende-Empfangseinheit 31 kann nun ein Überschreiten einer Länge 13 der Kohlebürste 32 registrieren und gegebenenfalls an eine übergeordnete Maschinensteuerung weiterleiten.

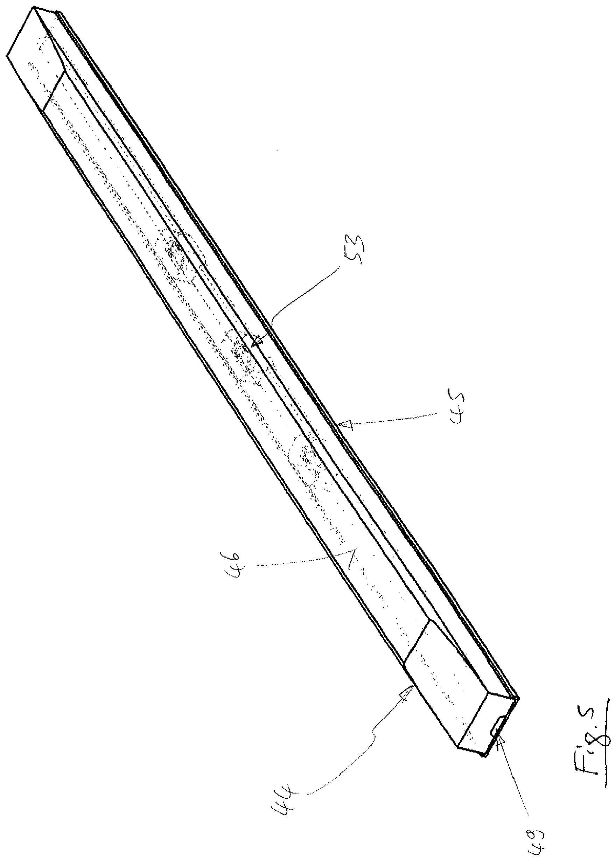

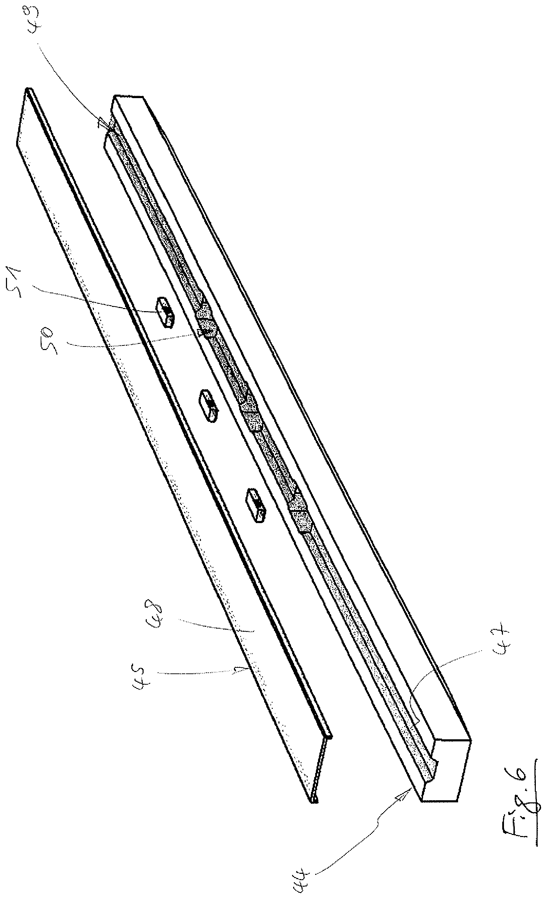

Eine Zusammenschau der Fig. 5 bis 7 zeigt eine Schleifleiste 44 eines Schienenfahrzeuges zur Kontaktierung mit einem Fahrdraht. Die Schleifleiste 44 besteht im Wesentlichen aus einem Kohlenstoffmaterial und ist mit einer Halteeinrichtung 45 einer nicht näher dargestellten Haltevorrichtung bzw. mit einem Pantographen verbunden. Eine Oberseite 46 der Schleifleiste 44 ist zur Kontaktierung mit dem Fahrdraht ausgebildet und eine Unterseite 47 mit einer Kupferschicht versehen, so dass eine gute Übertragung elektrischer Energie von der Schleifleiste 44 auf die Halteeinrichtung 45, welche als eine U-förmige Schiene 48 ausgebildet ist, möglich ist. In der Unterseite 47 ist weiter eine Nut 49 ausgebildet, in der ein hier nicht näher dargestellter Bruchsensor eingesetzt werden kann. Mittels des Bruchsensors kann ein möglicher Bruch der Schleifleiste 44 festgestellt und damit die Schleifleiste 44 automatisch vom Fahrdraht abgesenkt werden.

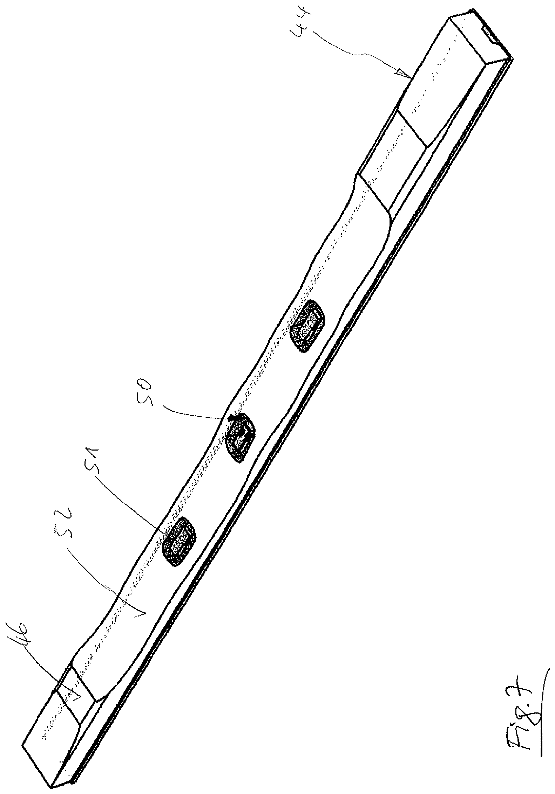

Weiter sind in der Unterseite 47 drei Ausnehmungen 50 ausgebildet, in die jeweils Transpondereinheiten 51 eingesetzt sind. Die Ausnehmungen 50 werden durch das Material der Schleifleiste 44 bzw. die Oberseite 46 abgedeckt, so dass die Transpondereinheiten 51 nicht mit einer Sende-Empfangseinheit kommunizieren können. Erst bei einem vollständigen Verschleiß der Schleifleiste 44, wie in Fig. 7 dargestellt, ist durch einen Abrieb der Oberseite 46 das Material der Schleifleiste 44 in diesem Bereich soweit abgetragen, dass eine Abriebfläche 52 entstanden ist, innerhalb der die Ausnehmungen 50 freigelegt sind. Die in der Ausnehmung 50 befindlichen Transpondereinheiten 51 können nun so mit der Sende-Empfangseinheit, welche beispielsweise an einer Brücke über einem Fahrdraht angebracht sein kann, kommunizieren. Das Material der Schleifleiste 44 im Bereich der Oberseite 46 bildet somit eine Abschirmeinrichtung 53 für die Transpondereinheiten 51 aus.

## Patentansprüche

1. Verschleißerkennungssystem umfassend zumindest ein konsumierbares Reibelement und eine Transpondereinheit (51), wobei die Transpondereinheit mit einer Sende-Empfangseinheit drahtlos kommunizieren kann, wobei die Transpondereinheit in dem Reibelement angeordnet ist, wobei das Reibelement eine Schleifleiste (44) zur Übertragung elektrischer Energie von einem Fahrdraht auf ein Fahrzeug ist,
**dadurch gekennzeichnet,**
**dass** das Verschleißerkennungssystem eine Abschirmeinrichtung (53) zur Abschirmung der Transpondereinheit aufweist, wobei ein Material der Schleifleiste die Abschirmeinrichtung ausbildet, wobei die Abschirmeinrichtung durch Abrieb einer Oberfläche der Schleifleiste beseitigbar ist, wobei die Abschirmeinrichtung so ausgebildet ist, dass mittels der Abschirmeinrichtung die Transpondereinheit in Abhängigkeit eines Verschleißzustandes der Schleifleiste zumindest teilweise abschirmbar ist, derart, dass eine Kommunikation zwischen der Transpondereinheit und der Sende-Empfangseinheit beeinflussbar ist.

2. Verschleißerkennungssystem nach Anspruch 1,
**dadurch gekennzeichnet,**
**dass** die Transpondereinheit (51) eine Codierung aufweist, die von der Sende-Empfangseinheit empfangbar ist.

3. Verschleißerkennungssystem nach Anspruch 1 oder 2,
**dadurch gekennzeichnet,**
**dass** die Transpondereinheit (51) eine RFID-Transpondereinheit ist.

4. Verschleißerkennungssystem nach einem der vorangehenden Ansprüche,
**dadurch gekennzeichnet,**
**dass** die Abschirmeinrichtung (53) der Transpondereinheit (51) unmittelbar benachbart angeordnet ist.

5. Verschleißerkennungssystem nach einem der vorangehenden Ansprüche,
**dadurch gekennzeichnet,**
**dass** das Verschleißerkennungssystem eine Haltevorrichtung umfasst, die zur bewegbaren Positionierung des Reibelements relativ zu einer Reibfläche dient.

6. Verfahren zur Verschleißerkennung, mit zumindest einem kosumierbaren Reibelement, und einer Transpondereinheit (51), wobei die Transpondereinheit mit einer Sende-/Empfangseinheit drahtlos kommunizieren kann, wobei die Transpondereinheit in dem Reibelement angeordnet ist, wobei das Reibelement eine Schleifleiste (44) zur Übertragung elektrischer Energie von einem Fahrdraht auf ein Fahrzeug ist,
**dadurch gekennzeichnet,**
**dass** aus einem Material der Schleifleiste eine Abschirmeinrichtung (53) zur Abschirmung der Transpondereinheit ausgebildet wird, wobei die Abschirmeinrichtung durch Abrieb einer Oberfläche der Schleifleiste beseitigt wird, wobei mittels der Abschirmeinrichtung (53) die Transpondereinheit in Abhängigkeit eines Verschleißzustandes der Schleifleiste zumindest teilweise abgeschirmt wird, derart, dass eine Kommunikation zwischen der Transpondereinheit und der Sende-Empfangseinheit beeinflusst wird.

7. Verfahren nach Anspruch 6,
**dadurch gekennzeichnet,**
**dass** die Abschirmeinrichtung (53) eine Permittivität eines räumlichen Übertragungsbereiches der Transpondereinheit (51) verändert.

8. Verfahren nach Anspruch 6 oder 7,
**dadurch gekennzeichnet,**
**dass** durch eine verschleißbedingte Maßänderung des Reibelements eine Beseitigung einer Abschirmung der Transpondereinheit (51) erfolgt.

## Claims

1. A wear detection system comprising at least one consumable friction element and a transponder unit (51), wherein the transponder unit can communicate wirelessly with a transmitter-receiver unit, the transponder unit being disposed in the friction element, the friction element being a contact strip (44) for transmitting electrical energy from a contact wire to a vehicle,
**characterized in that**
the wear detection system comprises a shield (53) for shielding the transponder unit, a material of the contact strip forming the shield, wherein the shield can be eliminated by abrasion of a surface of the contact strip, the shield being configured in such a manner that the transponder unit can be at least partially shielded in such a manner by means of the shield as a function of a wear condition of the contact strip that communication between the transponder unit and the transmitter-receiver unit can be influenced.

2. The wear detection system according to claim 1, **characterized in that**
the transponder unit (51) has a coding that can be received by the transmitter-receiver unit.

3. The wear detection system according to claim 1 or 2,
**characterized in that**
the transponder unit (51) is an RFID transponder unit.

4. (The wear detection system according to any one of the preceding claims,
**characterized in that**
the shield (53) is arranged directly adjacent to the transponder unit (51).

5. The wear detection system according to any one of the preceding claims,
**characterized in that**
the wear detection system comprises a support structure which serves to movably position the friction element relative to a friction surface.

6. A method for detecting wear using at least one consumable friction element and a transponder unit (51), wherein the transponder unit can communicate wirelessly with a transmitter-receiver unit, the transponder unit being disposed in the friction element, the friction element being a contact strip (44) for transmitting electrical energy from a contact wire to a vehicle,
**characterized in that**
(a shield (53) for shielding the transponder unit is formed from a material of the contact strip, the shield being eliminated by abrading a surface of the contact strip, the transponder unit being at least partially shielded in such a manner by means of the shield (53) as a function of a wear condition of the contract strip that communication between the transponder unit and the transmitter-receiver unit is influenced.

7. The method according to claim 6,
**characterized in that**
the shield (53) changes a permittivity of a spatial transmission range of the transponder unit (51).

8. The method according to claim 6 or 7,
**characterized in that**
a wear-related dimensional change of the friction element eliminates a shielding of the transponder unit (51).

## Revendications

1. Système de détection d'usure comprenant au moins un élément de frottement consommable et une unité de transpondeur (51), l'unité de transpondeur étant configurée pour communiquer sans fil avec une unité d'émission-réception, l'unité de transpondeur étant disposée dans l'élément de frottement, l'élément de frottement étant une bande de frottement (44) pour la transmission d'énergie électrique d'un fil de contact à un véhicule,
**caractérisé en ce que**
le système de détection d'usure comprend un blindage (53) pour blinder l'unité de transpondeur, un matériau de la bande de frottement formant le blindage, le blindage pouvant être éliminé par l'abrasion d'une surface de la bande de frottement, le blindage étant configuré de telle manière que l'unité de transpondeur peut être blindée au moins partiellement par le blindage en fonction d'un état d'usure de la bande de frottement de sorte qu'une communication entre l'unité de transpondeur et l'unité d'émission-réception peut être influencée.

2. Système de détection d'usure selon la revendication 1,
**caractérisé en ce que**
l'unité de transpondeur (51) a un codage qui peut être reçu par l'unité d'émission-réception.

3. Système de détection d'usure selon la revendication 1 ou la revendication 2,
**caractérisé en ce que**
l'unité de transpondeur (51) est une unité de transpondeur RFID.

4. Système de détection d'usure selon l'une quelconque des revendications précédentes,
**caractérisé en ce que**
le blindage (53) est disposé directement adjacent à l'unité de transpondeur (51).

5. Système de détection d'usure selon l'une quelconque des revendications précédentes,
**caractérisé en ce que**
le système de détection d'usure comprend une structure de support qui sert à positionner l'élément de frottement de manière déplaçable par rapport à une surface de frottement.

6. Procédé de détection d'usure utilisant au moins un élément de frottement consommable et une unité de transpondeur (51), l'unité de transpondeur pouvant communiquer sans fil avec une unité d'émission-réception, l'unité de transpondeur étant disposée dans l'élément de frottement, l'élément de frottement étant une bande de frottement (44) pour la transmission d'énergie électrique d'un fil de contact à un véhicule,
**caractérisé en ce**
**qu'**un blindage (53) pour blinder l'unité de transpondeur est formé à partir d'un matériau de la bande de frottement, le blindage étant éliminé par l'abrasion d'une surface de la bande de frottement, l'unité de transpondeur étant blindée au moins partiellement par le blindage (53) en fonction d'un état d'usure de la bande de frottement de sorte qu'une communication entre l'unité de transpondeur et l'unité d'émission-réception est influencée.

7. Procédé selon la revendication 6,
**caractérisé en ce que**
le blindage (53) change une permittivité d'une portée de transmission spatiale de l'unité de transpondeur (51).

8. Procédé selon la revendication 6 ou la revendication 7,
**caractérisé en ce**
**qu'**un changement de dimension de l'élément de frottement dû à l'usure élimine un blindage de l'unité de transpondeur (51).
